# EUROPEAN PATENT SPECIFICATION

(11) **EP 2 704 587 B1**
(45) Date of publication and mention of the grant of the patent: **16.08.2017**
(21) Application number: 12720782.7
(22) Date of filing: 03.05.2012
(51) Int. Cl.: C11B 1/04, C11B 1/10, C11B 3/16, A23K 20/147, A23K 20/10, A23L 5/20, A23L 33/00, A23L 33/105, A23L 33/15, A23L 33/185, A23L 33/22

(54) **A PROCESS FOR THE MANUFACTURE OF PRODUCTS FROM CRUCIFEROUS CROPS**
VERFAHREN ZUR HERSTELLUNG VON ERZEUGNISSEN AUS KREUZBLÜTLERN
PROCÉDÉ DE FABRICATION DE PRODUITS À PARTIR DE CULTURES CRUCIFÈRES

(30) Priority: 03.05.2011 DK 201170217
(43) Date of publication of application: 12.03.2014
(73) Proprietor: Københavns Universitet, 1165 Copenhagen K (DK); Fonden Grønt Center Råhavegård, 4960 Holeby (DK)
(72) Inventor: ANDERSEN, Keld Ejdrup, DK-4300 Holbæk (DK); BAGGER, Christian, DK-2690 Karlslunde (DK); SØRENSEN, Hilmer, DK-2660 Brøndby Strand (DK); SØRENSEN, Jens Christian, DK-2660 Brøndby Strand (DK)
(74) Representative: Awapatent A/S
(86) International application number: PCT/DK2012/050150
(87) International publication number: WO 2012/149941

(56) References cited:
- EP-A2- 0 772 976
- WO-A1-2010/020038
- US-A- 4 496 598

## Description

### Field of the invention

This invention relates to processes for the manufacture of a product from a plant material, specifically the manufacture of a product from seeds from a plant of the order Capparales especially the family *Brassicaceae.* The product may be a protein product or a non-protein product. The processes of the invention provide plant products of use in the animal feeds, non-food products or for human consumption. Non-food products include adhesives, paint, etc. In particular, the protein products have reduced contents of undesirable glucosinolates, phenolics and components from non-enzymatic and enzyme catalysed degradation of glucosinolates as well as oxidation products of phenolics and glucosinolates as these components have negative effects on nutritional value and colour.

### Background of the invention

Processes for the production of plant products, e.g. protein isolates or concentrates or the like, are well known in the prior art. Such plant products are commonly used for animal feeds although they may also be used for human consumption or other purposes. In addition to nutritionally valuable components many of the considered plants also comprise components that give unwanted colour and negative nutritional value. Furthermore, some plants may have defensive systems that may be activated, for example by disruption of the cellular structure and mixing the plant components, to degrade precursor components into more active components.

Plants of the order Capparales and especially the *Brassicaceae* family are important food crops, with many representatives being cultured on a worldwide basis. The family members provide a source for plant oil and their seeds typically also have a high protein content. The seeds of rape and mustard may for example yield 40% oil and 30% pro-seeds of rape and mustard may for example yield 40% oil and 30% protein. However, production of native protein isolates and concentrates from seeds of plants of the *Brassicaceae* family is complicated owing to the glucosinolate-myrosinase system present in the seeds. Myrosinase is an enzyme or enzyme mixture of isoenzymes capable of catalysing the hydrolysis and transformation of glucosinolates into various compounds with sharp, bitter or unpleasant taste, some of which are also toxic at concentration levels found in the plants. For example, myrosinase cleaves off the glucose group from a glucosinolate, and the remaining molecule then quickly converts to a thiocyanate, a nitrile or isothiocyanates or products thereof; these are often the quantitatively dominating active substances that at sufficiently high concentrations serve as defence for the plant, and function as antinutrients for humans and monogastric animals. Myrosinases are classified under EC 3.2.1.147. The specific degradation product of myrosinase activity on a glucosinolate may depend on factors such as pH or other proteins or enzymes present. Myrosinase is commonly stored within myrosin grains in myrosin cells, but may also be in protein bodies/vacuoles, and as membrane associated cytosolic enzymes separated from the glucosinolates. In this form the enzymes are maintained segregated from their glucosinolate substrates and furthermore they may be kept in a highly stable form, which is protected from degradation. In particular, *Brassicaceae* seeds may have low water contents keeping the myrosinase in an inactive form. When the structure of the seeds breaks down, for example by disruption of the plant material, especially in the presence of water, the myrosinase is brought into contact with the available glucosinolate substrate and hydrolysis occurs. Myrosinases are commonly very efficient enzymes capable of fast transformation of glucosinolates which in most processing is undesirable except for mustard production.

Myrosinases are commonly inactivated by heating to high temperature, e.g. to 70°C or more. However, further to enzymatic breakdown of glucosinolates, glucosinolates may also be degraded non-enzymatically. In particular, glucosinolates are degraded in the presence of ferrous iron (i.e. Fe²⁺); ferrous iron may occur in sufficient amounts to catalyse breakdown of glucosinolates in industrial scale processes utilising steel tanks and equipment. Due to the very strong effect, e.g. bitter taste, discolouring effect, negative nutritional value etc., of glucosinolate degradation products only small amounts of ferrous iron are necessary to cause a detectable effect on the final product from a *Brassicaceae* plant material. Ferrous iron-mediated degradation is not hindered at high temperature.

Production of protein products from *Brassicaceae* seeds has been addressed in the prior art although improved processes for the production of products, e.g. protein products, from *Brassicaceae* seeds are still needed.

WO 2010/020038 relates to the production of a canola protein isolate. It thus describes a process of preparing a protein isolate, which comprises: adding a calcium salt, e.g. calcium chloride, to a supernatant from the precipitation of a canola protein micellar mass to form a calcium phytate precipitate, removing precipitated calcium phytate from the resulting solution, optionally adjusting the pH to 2.0 to 4.0 and concentrating the solution. WO 2010/020038 does not mention, nor address any problem occurring from myrosinase-generated degradation of glucosinolates.

WO 2010/020042 also relates to the production of soluble canola protein isolate and discloses a process similar to that of WO 2010/020038, and it likewise does not address the myrosinase-glucosinolate problem.

US 2009/0286961 discloses processes for production of protein isolates from oilseed meals. Relevant oilseeds for US 2009/0286961 comprise seeds of canola, rapeseed, mustard, broccoli, flax, cotton, hemp, safflower, sesame or soybean. The process of US 2009/0286961 may comprise removing fibre from a defatted or protein-enriched oilseed meal, which step involves addition of a cellulase enzyme after adjusting the pH to a value suitable for enzyme activity, such as 3 to 7, followed by heating to a temperature likewise suitable for enzyme activity, to hydrolyse the fibre. The process of US 2009/0286961 provides a heat treatment of the oilseed, which results in the inactivation of the enzymes present in the oilseed, for example, myrosinase, lipase, phospholipase, with the intention to prevent enzymatic degradation of the oil and breakdown of glucosinolates, and further the heat treatment can also denature the proteins in the concentrate or isolate.

Thus, the process of US 2009/0286961 may provide a product free from glucosinolate degradation components, but at the cost of denaturing other proteins present in the oilseeds, and it does not address the potential problems which may be caused by soluble phenolics.

EP 0772976 discloses a process that produces a brassica vegetable supplement or concentrate with high levels of sulphoraphane and minimal sulphoraphane-nitrile. Thus, EP 0772976 aims to maximise the conversion of a parent glucosinolate, gluocoraphanin, to sulphoraphane while minimising the presence of sulphoraphane-nitrile. In its broadest form this may be achieved in a process comprising the steps of deactivating endogenous myrosinase enzyme in a brassica vegetable and blending the vegetable with exogenous myrosinase enzyme. Specifically, the process may comprise blanching fresh broccoli to inactivate endogenous myrosinase enzymes, blending the steamed broccoli with a source of exogenous myrosinase enzymes, preparing a homogenate from the blended broccoli and exogenous myrosinase enzymes, centrifuging the homogenate, concentrating the supernatant by low heat vacuum concentration, adding a carrier such as starch, maltodextrin, sucrose, dextrose and vegetable gums to the concentrated supernatant, lowering the pH to 3.5, forming a powder by drying the concentrate and carrier, and forming a tablet from the powder.

While EP 0772976 addresses the activity of myrosinase on glucosinolate and discloses a process comprising its inactivation, the process is not suited to provide protein from brassica plants in a non-denatured form.

WO 2008/144939 discloses a process for aqueous protein extraction from *Brassicaceae* oilseeds. The process comprises an aqueous extraction of Brassicaceae oilseed meal where the pH is adjusted to a value of from about 2.5 to about 5.0 to obtain a soluble napin-rich protein extract and a cruciferin-rich residue. In particular, it was found that the interval of pH 3 to 5 provided a desirable low solubility. The cruciferin-rich residue may be subjected to a further aqueous extraction, for example at neutral or alkali pH such as from about 7.0 to about 13.0, to obtain a soluble cruciferin-rich protein extract and a low-protein residue. The soluble protein extracts may be desalted and purified by filtration, such as ultrafiltration or diafiltration. WO 2008/144939 specifically discloses filtration of soluble fractions using 5 kDa membranes.

WO 2008/144939 does not explicitly mention myrosinase, and the myrosinase-glucosinolate problem is thus not addressed explicitly. In particular, no concern is shown to separate myrosinase from glucosinolate to prevent subsequent enzymatically catalysed glucosinolate transformations.

In light of the above there is a need for a process capable of providing a product from seeds from plants of the order Capparales especially the *Brassicaceae* family, which product is free from degradation products from glucosinolates occurring from the catalytic activity of myrosinase on glucosinolates and also non-enzymatic degradation of glucosinolates. Likewise, there is a need for a process capable of removing phenolics and glucosinolates and their degradation products. In particular, there is a need for a process capable of providing native protein from the seeds, and avoiding unwanted oxidations with production of various oxidation products. Furthermore, there is a need for a process to separate glucosinolate from myrosinase on an industrial scale. The present invention addresses these problems.

### Summary of the invention

The present invention relates to a process for the manufacture of a product from seeds from a plant of the order *Capparales* comprising the steps of:
providing the seeds having a water content of about 9% by weight or less;
   - disrupting the seeds;
   - mixing the disrupted seeds with aqueous acid to provide a pH of the mixture in the range of about 1.0 to about 3.0; or mixing the disrupted seeds with aqueous acid comprising a chelating acid to provide a pH of the mixture in the range of about 1.0 to 5.0;
   - separating myrosinase from glucosinolates to provide a myrosinase-containing fraction and a myrosinase-free fraction; and
   - isolating the product from the myrosinase-containing fraction or from the myrosinase-free fraction;
wherein the temperature of the disrupted seeds and the aqueous mixture is maintained at a value of from about 0°C to about 65°C. It is preferred that the seeds are from a plant of the family *Brassicaceae.* It is further preferred that the temperature is from about 0°C to about 50°C.

The process of the present invention provides products from a plant material of the *Brassicaceae* family, which products have little or no glucosinolates and/or degradation products thereof. In particular, the process allows fractionation of products from seeds of plants containing both glucosinolates and myrosinase enzymes, which may otherwise degrade the glucosinolates without inhibition of the enzymes. The seeds from any plant of the order Capparales, especially the family *Brassicaceae,* may be used in the process. It is however also contemplated to employ other parts of plants from the *Brassicaceae* family. For example, in certain embodiments the product is manufactured from vegetative parts from any plant of the order Capparales especially the family *Brassicaceae.* In a preferred embodiment, the seeds are rapeseeds (*Brassica napus* L.).

The enzymatic degrading of glucosinolates may occur following disruption of seeds from the plant of the order Capparales especially the family *Brassicaceae.* Commonly the disruption of the seeds results in the breakdown of the seeds, where, in undisturbed seeds, the myrosinase enzymes are isolated from the glucosinolates. Thus, the disruption of the seeds facilitates the contact between the glucosinolates and the myrosinase enzymes, which may thereby in the presence of water initiate the enzymatic degradation of the glucosinolates. In particular, when the seeds are disrupted as part of a traditional industrial process the disrupted plant material may be subjected to aqueous extraction providing further activation of the myrosinase; this is prevented in the process of the invention.

Prior to disruption of brassica seeds myrosinase and glucosinolate are generally segregated and no enzymatic breakdown of glucosinolates will occur. However, a high water content of the seeds during the initial disruption allows enzymatic degradation of the glucosinolates, thereby creating a risk of damaging the final product. Thus, according to the present invention the water content of the seeds should be low, i.e. about 9% by weight or less. The inventors found that the enzymatic degradation of glucosinolates facilitated by the activity of the myrosinase is sufficiently reduced when the water content is at this level. Hence, providing seeds with low water content provides a sufficient time frame for establishing further measures for preventing the enzyme activity e.g. mixing aqueous acid etc. Certain types of brassica seeds may have inherent water content higher than 9% by weight. Therefore, in a specific embodiment the step of providing the seeds may comprise a step to reduce the water content to about 9% by weight or less. In a preferred embodiment of the present invention the water content of the seeds is in the range of about 2%, e.g. about 4%, to about 9% by weight. When the water content is in this range recovery of proteins and enzymes in their native state has been found to be optimal and reduction of glucosinolate degradation owing to milling is reduced.

Any method may be employed to reduce the water content. For example, the seeds may be dried by heating the seeds. When intact seeds are heat dried correctly the protein present in the seeds will generally not denature due to the stable form of the protein in the seeds. In another embodiment, the water content may be lowered using extraction. Extraction of water may be performed using liquid solvents, e.g. ethanol or isopropanol, or water may be extracted using solvents in a subcritical or supercritical state, which is also referred to as "subcritical extraction" or "supercritical extraction". It is preferred to use carbon dioxide (CO₂) as a solvent in supercritical extraction to reduce the water content, although other appropriate solvents may also be used in a supercritical extraction. Supercritical extraction is well-known to the skilled person who can readily set up a process to preferentially extract water from the seeds, e.g. using carbon dioxide at 50 °C and 20 MPa. Likewise, the skilled person can readily set up a process to preferentially extract oil from the seeds using a solvent in a supercritical state, e.g. using carbon dioxide at 50 °C and 60 MPa. Supercritical extraction of water and oil from the seeds may be done sequentially in any order or simultaneously. The same supercritical solvent, e.g. carbon dioxide, may advantageously be used to specifically, selectively and sequentially extract both water and oil. Extraction of water using supercritical carbon dioxide advantageously provides a process where water is removed without subjecting the seeds, and thereby the proteins of the seeds, to high temperatures so that heat denaturation of proteins is minimised.

The present inventors have now found that myrosinase enzymes may be sufficiently inhibited without application of excessive heat, as is otherwise commonly required in techniques of the prior art, to the disrupted seeds when the seeds are processed according to the invention. When the temperature of the disrupted seeds and the aqueous mixture is maintained at a value in the range of about 0°C to about 65°C, preferably about 50°C, heat mediated denaturation of protein is prevented. Thus, the process provides for recovering and isolating native proteins as well as enzymes which have retained their activity. In particular, it provides a protein product of non-denatured protein. By avoiding heating recovered proteins, e.g. native proteins or non-denatured proteins, will have better solubility parameters. Furthermore, low protein solubility is also observed if glucosinolate degradation products have reacted with proteins, especially on side-chains of lysinyl and cysteinyl residues. Thus, by avoiding glucosinolate degradation protein solubility can be preserved. This particularly holds true for rapeseed proteins. The temperature should be kept in the indicated range from disruption of the seeds until myrosinase has been separated from the glucosinolates. Furthermore, the lower temperature of the aqueous mixture, the lower the activity of the myrosinase enzyme. Therefore, it is preferred that the temperature is in the range of about 0°C to about 25°C (or "ambient temperature").

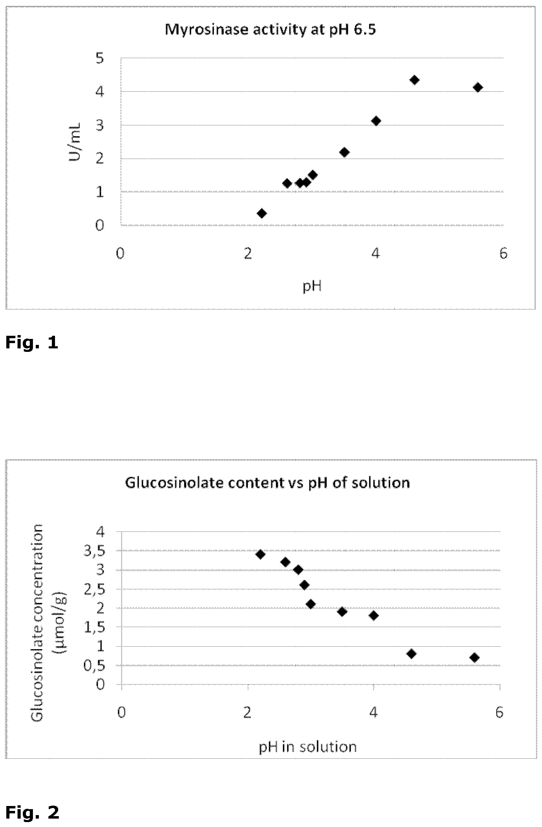

The disrupted seeds are mixed with an aqueous acid to provide a pH of the thus obtained aqueous mixture in the range of about 1.0 to about 5.0. The inventors found that a pH in this range inhibits the activity of the myrosinase enzyme. Figure 1 shows the effect of pH on the activity of myrosinase. Thus, by maintaining the pH in a range where the degradation of glucosinolates by myrosinase is retarded the glucosinolates and myrosinase enzymes may be separated without any degradation products of glucosinolate being produced. The present inventors have now further found that a pH in this range, i.e. about 1.0 to about 5.0, when obtained using a chelating acid, optionally obtained using a chelating acid in combination with another acid, such as a strong inorganic acid or an organic acid, ferrous iron-mediated hydrolysis and other non-enzymatic breakdown of glucosinolates and phenolics are inhibited. When used in combination with a temperature in the range of about 0°C to about 50°C, especially about 0°C to about 25°C, about 20°C or about 15°C, it is possible to recover native proteins and non-degraded glucosinolates from the seeds. In a particular embodiment the pH of the aqueous mixture is about 1.0 to about 3.0. The present inventors found that maintaining the pH within this range results in almost complete inhibition of the myrosinase enzyme. Figure 2 shows the residual content of glucosinolates after 10 min reaction as a function of pH. The combined effect of myrosinase inhibition and prevention of non-enzymatic degradation is especially pronounced at pH 3.0 or lower, e.g. in the range of about 2.0 to about 2.5, in the presence of a chelating acid, optionally in combination with another acid. This allows that both myrosinase, being inhibited by the low pH, and glucosinolates as well as soluble phenolics are present in solution and may be recovered. When the pH is about 2.0 or higher the activity of the enzyme may be recovered once the pH is readjusted to e.g. the optimal value for the enzyme, e.g. to about 6.5. Therefore, when the pH is in the range of about 2.0 to about 2.5, e.g. about 2.2 to about 2.3, it is possible to obtain a good yield of glucosinolate due to its high solubility at this pH and also it is possible to recover the pH-inhibited myrosinase which may be reactivated by increasing the pH to above 5. Furthermore, with the pH of the aqueous mixture in the range of 2.0 to about 3.0, about 2.0 to about 2.5, or about 2.2 to about 2.3, the proteins of the seeds may particularly advantageously be recovered in a native state. When the pH is below about 2, e.g. in the range of about 1.0 to about 2.0, the myrosinase may be irreversibly inactivated. Thus, in a specific embodiment the disrupted seeds are mixed with aqueous acid to provide a pH of the mixture in the range of about 1.0 to about 2.0. When the pH is in the range of about 1.0 to about 3.0 the solubility of proteins is generally higher than when the pH is above 3.0, and this range may provide an improved yield of protein. In any embodiment of the invention it is possible to adjust the pH further after mixing the disrupted seeds with aqueous acid. In particular, the pH may be monitored and controlled to a desired value by adding acid or base, or the pH may increased or decreased likewise by adding acid or base.

Any acid capable of providing a pH in the indicated range may be used in the method of the invention. The acid may be a strong acid in an appropriate concentration, or the acid may be a buffer. In particular in embodiments where the pH is in the range of about 2.0 to about 3.0, e.g. about 2.2 to about 2.3 it is preferred that a buffer is used. It is in all embodiments possible to employ a combination of buffers and strong acids. The acid may be a mineral acid or an organic acid, in particular the acid may be compatible for use in food products. It is preferred that the aqueous acid comprises a chelating agent, in particular a chelating acid.

Any ratio of disrupted seeds to aqueous acid is possible in the process of the invention. However, in preferred embodiments the ratio of disrupted seeds to aqueous acid is 1:20 to 10:1.

According to the process of the invention the myrosinase and glucosinolates are separated into two fractions, thereby providing a myrosinase-containing fraction and a myrosinase-free fraction. In general in the range of pH of the invention the myrosinase and glucosinolates are in soluble forms. However, in certain embodiments myrosinase and/or glucosinolates may also be precipitated from the solution. The inventors found that separating the glucosinolate substrates from the myrosinase enzyme provides for the recovery of high value products free from glucosinolates and in particular degradation products derived from glucosinolates. Furthermore, both myrosinase and glucosinolates may be recovered, and in certain aspects the invention relates to myrosinase and glucosinolate obtainable according to the method of the invention.

Any method capable of separating myrosinase and glucosinolate may be used in the method of the invention. In general, glucosinolates are small molecules with a negative charge, whereas myrosinases are protein molecules of much larger size; certain myrosinases have isoeletric points at about pH 5 or higher making these myrosinases positively charged in the pH-range in the method of the invention. Thus, myrosinase and glucosinolate may be separated based on their sizes, e.g. using an ultrafiltration membrane, diafiltration or gelfiltration. In particular, an ultrafiltration membrane may be selected with a cut-off value, e.g. 100 kDa or less, allowing retention of the myrosinase in the retentate whereas the glucosinolate may be recovered from the permeate fraction. Thus, when ultrafiltration or diafiltration is employed the retentate will represent the myrosinase-containing fraction, being free from glucosinolates, and the permeate will represent the myrosinase-free fraction, containing the glucosinolates and soluble phenolics.

Myrosinase may also be separated from glucosinolates using adsorptive methods. Thus, the mixture of the disrupted seeds with aqueous acid may be contacted with any adsorptive material capable of adsorbing, or binding, myrosinase without binding glucosinolates or vice versa followed by elution of the adsorbed fraction from the adsorptive material. For example, myrosinase may be adsorbed to, and separated from glucosinolates, by contacting the aqueous mixture with a negatively charged material, e.g. a cation-exchange material. Likewise, glucosinolates may be adsorbed to, and separated from myrosinase, by contacting the aqueous mixture with a positively charged material, e.g. an anion-exchange material. Any ion-exchange material is appropriate for the method of the invention. It is also possible to adsorb the myrosinase to adsorptive material employing other principles, for example myrosinase may be adsorbed to a material functionalised with affinity ligands capable of selectively binding myrosinase.

When adsorptive materials are used to separate myrosinase from glucosinolates the adsorbed component, i.e. myrosinase or glucosinolates as appropriate, can be eluted from the adsorptive material using any appropriate method as will be well known to the skilled person. For example, when a cation-exchange material is employed the myrosinase-containing fraction is represented by the adsorbed material, and when an anion-exchange material is employed the adsorbed material represents the myrosinase-free fraction containing the glucosinolates and soluble phenolics. The adsorbed material may then be eluted from the adsorptive material.

According to the present invention products may be recovered from both the myrosinase-containing fraction and the myrosinase-free fraction. In particular the present invention provides for isolating a product free of glucosinolate and/or glucosinolate degradation products, e.g. a product free of compounds such as nitriles, isothiocyanates, thiocyanates, epithionitriles and oxazolidine-2-thiones. Thus, the present process improves the quality of the isolated product and supersedes a number of purifying steps otherwise required for removing said compounds. In addition, the separation provides for the possibility of recovering both the myrosinase enzyme and the glucosinolates intact.

In an embodiment of the process of the present invention the steps of mixing with aqueous acid and disrupting the seeds are performed simultaneously. This procedure further facilitates the fast inhibition of the myrosinase enzyme. The myrosinase enzyme typically has a high reaction rate. Therefore, it is important that the disrupted seeds are mixed with aqueous acid already being at the desired pH, or that the mixing and disruption are performed simultaneously. It may however be necessary to adjust the pH of the mixture to retain the desired value. Once the disrupted seeds have been mixed with aqueous acid the myrosinase is inhibited, and the disrupted seeds may be extracted with the aqueous acid for any duration as desired.

In an embodiment of the process according to present invention, the process may further comprise the steps of: separating an oil fraction from an oil-depleted fraction. Any method for separating an oil fraction from the seeds is appropriate for the invention, and the term should be understood in its broadest terms. For example, "separating oil" may comprise pressing or extraction using appropriate solvents, e.g. liquid solvents such as organic solvents, or solvents in a supercritical state, such as supercritical carbon dioxide, or any combination of pressing and, liquid or supercritical, solvent extraction. When the seeds have been subjected to oil pressing, the seed residue, or "press cake", is considered to represent "disrupted seeds", although the press cake may also be disrupted further prior to mixing with aqueous acid. Likewise, the press cake may be disrupted further simultaneously with mixing with aqueous acid. In yet a further embodiment, an oil fraction is separated after mixing with aqueous acid, e.g. using a solid-liquid separation unit capable of separating two liquid phases, e.g. an oil phase and an aqueous phase, and a solid phase. For example the process may employ a three-phase decanter centrifuge.

In specific embodiments the steps of the process of the invention are set up to operate on a continuous basis. One, multiple or all steps may be set up to operate on continuously. Continuous operation is especially useful for industrial scale processing of large volumes, e.g. multiple tonnes per hour, of seeds.

In a preferred embodiment of the process according to the present invention the product is native protein. In particular, the product is native brassica proteins with a low content of glucosinolates and glucosinolate degradation products. These proteins are highly suitable as food ingredients and will have values comparable to casein. In another embodiment the product is a soluble or non-soluble dietary fibre. In a particular embodiment, the invention relates to a process, wherein the dark colour of proteins and fibre products are reduced, e.g. compared to proteins and fibres produced by traditional methods, due to the separation of the substrates, e.g. soluble phenolics, and enzymes involved in the unwanted colour formation. In a further embodiment, non-enzymatic colour formation of proteins and fibre products are reduced due to inhibition of the involved, e.g. metal catalysed or other, oxidation. The process according to the invention may provide a product, wherein the nutritive value of proteins, e.g. native protein, and fibre products are retained due to the initial inhibition and separation of the substrates and enzymes otherwise responsible for the reactions causing reduced nutritive values of the proteins and fibre products.

In another embodiment the product is a glucosinolate. Glucosinolates are usable as bioactive compounds and/or molecular building blocks. Depending on the type, these compounds can be used as pharmaceuticals (e.g. cancer prevention), or as pesticides, fungicides or insecticides with or without combination with myrosinases. In yet other embodiments, the product of the process of the invention is a degradation product from glucosinolate, e.g. a degradation product from myrosinase treatment of glucosinolate. In another embodiment the product is active myrosinase, and in a further embodiment the product is a myrosinase in an inhibited or inactive form. In a preferred embodiment of the process according to the invention the myrosinase is recovered in its active form and/or in a state from which it may return to its active form. Such myrosinase enzymes are usable for glucosinolate degradation as the degradation products of glucosinolate compounds e.g. can be used as pesticides, fungicides, and/or insecticides. In another embodiment the product is an antioxidant or a phenolic compound. The antioxidants may be neutral, anionic, and cationic antioxidants. In another embodiment the product is oil. In another embodiment the product is an amphiphilic lipid, e.g. a phospholipid or a glycolipid. In another embodiment the product is a lipid soluble antioxidant or vitamin.

### Brief description of the figures

Embodiments of the present invention are explained in further detail by use of the following schematic drawings. The illustrations serve as examples and should not limit to the scope of the invention:
Figure 1 shows myrosinase activity as a function of pH.
Figure 2 shows residual glucosinolate content as a function of pH.
Figure 3 shows the effect of different buffers on myrosinase activity.
Figure 4 shows a schematic flow diagram illustrating the process steps leading to fractionation of various valuable products derived from cruciferous plant material.
Figure 5 shows a schematic flow diagram illustrating the process steps for the fractionation of oil emulsion derived from the seeds of a Capparales plant.
Figure 6 shows a schematic flow diagram illustrating the process steps for the fractionation of protein rich material.
Figure 7 shows a schematic flow diagram illustrating the process steps for the fractionation of an acidic water fraction obtained in a process for the fractionation of valuable products derived from cruciferous plant material.

### Detailed description of the invention

The present invention relates to a process for the manufacture of a product from seeds from a plant of the order *Capparales* comprising the steps of:
providing the seeds having a water content of about 9% by weight or less;
   - disrupting the seeds;
   - mixing the disrupted seeds with aqueous acid to provide a pH of
the mixture in the range of about 1.0 to about 3.0; or mixing the disrupted seeds with aqueous acid comprising a chelating acid to provide a pH of the mixture in the range of about 1.0 to 5.0;
   - separating myrosinase from glucosinolates to provide a myrosinase-containing fraction and a myrosinase-free fraction; and
   - isolating the product from the myrosinase-containing fraction or from the myrosinase-free fraction;
wherein the temperature of the disrupted seeds and the aqueous mixture is maintained at a value of from about 0°C to about 65°C.

The description refers to the figures showing schematic flow diagrams for the processes where each process step is generally represented with a box labelled according to the process. Likewise, starting or end products, as well as intermediary products, are also identified by appropriately labelled boxes.

Initially, seeds from a plant of the order Capparales especially the family *Brassicaceae* with a low water content are provided. Any plant of the order Capparales especially the *Brassicaceae* family is appropriate for the process, although plants of other families containing a myrosinase-glucosinolate defensive system may also be processed according to the invention. Likewise, other parts of plants of the *Brassicaceae* family are also appropriate for certain embodiments of the process. The family contains *inter alia* species such as *Brassica oleracea* (broccoli, cabbage, cauliflower, etc.), *Brassica rapa* (turnip, Chinese cabbage, etc.), *Brassica napus* (rapeseed, etc.), *Brassica nigra* (black mustard), *Brassica juncea* (sarepta mustard), *Raphanus sativus* (common radish), *Sinapis alba* (mustard), *Armoracia rusticana* (horseradish), *Matthiola* (stock), *Arabidopsis thaliana.* Preferred seeds are rapeseeds or canola seeds. Other relevant seeds are those of cabbage, broccoli, cauliflower, turnip, mustard, radish, horseradish, cress, wasabi and watercress. The family may also be referred to as *Cruciferae,* the mustard family or cabbage family, and the terms brassica and crucifer (or cruciferous) likewise refer to plants of the family. These terms may be used interchangeably.

Plants generally comprise a complex mixture of soluble and insoluble components such as proteins and non-protein components. The process of the present invention provides products derived from these components, such as proteins, e.g. native protein, myrosinase, in inhibited, active or inactive form, fibres, starch, pectin, cellulose and hemicellulose, glucosinolates and their degradation products, antioxidants, phenolics, minerals and other organic components.

"Seeds" as referred to in connection with the present invention refers any seed obtained and/or derived from a plant. Seeds may also be referred to as cellular endosperm. The principal macromolecular materials stored in seeds are carbohydrates, proteins, and lipids. These compounds occur together but the relative amounts vary in seeds of different taxa.

The process of the present invention can also be used with other glucosinolate/myrosinase containing plant materials such as e.g. cabbage, broccoli, cauliflower, etc. The process may be modified according to the starting material (crucifer variety, plant part etc.) but the general process is as described.

Members of the *Brassicaceae* family typically comprise one or more myrosinase enzymes. A single species may comprise a single myrosinase enzyme or several different myrosinase enzymes, and a myrosinase enzyme may be found as different isoenzymes. In the context of the invention the term "myrosinase" refers generally to myrosinase enzymes present in a relevant seed. In particular, a myrosinase may be an enzyme classified under EC 3.2.1.147.

The term "glucosinolate" should also be understood broadly. Glucosinolates are typically water-soluble anions with well defined structures, consisting of alkyl aldoxime-*O*-sulfate esters with a β-D-thioglucopyranosyl group at the aldoxime carbon (C-0) in *cis*-[Z]-configuration to the sulphate group. With a few exceptions, the alkyl side chain vary for different glucosinolates, and it is variation in this side group that is responsible for the majority of variation in the biological activities of these plant compounds. A single plant may contain one or more different glucosinolates, and the term glucosinolate refers generally to glucosinolates present in a relevant seed. In particular, "glucosinolate" may also refer to a mixture of glucosinolates.

In general, the plant material will be subjected to some degree of disruptive processing in the methods of the present invention. This disruptive processing (or "disruption" or derived forms of this term) may be any processing intended to reduce the size of parts or particles of the plant material, and typical disruptive processing involves cutting, pressing, chopping, milling, grinding, crushing, grating, shredding etc. In particular the disruption aims to degrade or disrupt the cell walls of the plant material to make the contents of the cells accessible. In a preferred embodiment the seeds are disrupted by wet milling after mixing the seeds with aqueous acid, so that the disruption and further mixing are performed simultaneously. In yet another embodiment the seeds are disrupted in an initial dry disruption followed by wet milling, which is preferentially performed simultaneously with the mixing with the aqueous acid. The terms plant material and disrupted plant material may also refer to any liquid produced in the disruptive processing, and the term "plant material" may thus refer to any whole plant, any part of a plant, a solid or liquid material obtained during disruptive processing or a mixture of these.

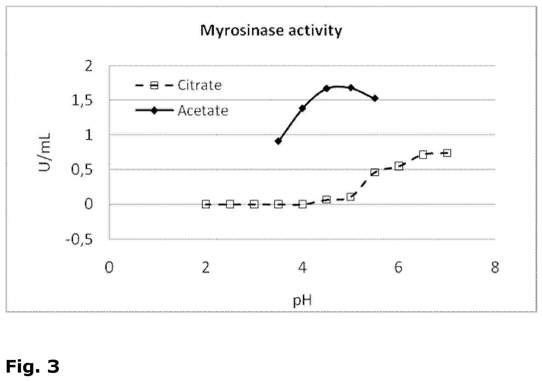

The methods of the present invention comprise a step mixing the disrupted seeds with aqueous acid to provide a pH of the mixture in the range of about 1.0 to about 5.0. In the context of the present invention this range is generally referred to as "low pH". Other pH ranges relevant to the process of the present invention are values of about 1.0 to about 3.0, such as about 2.0 to about 2.5, such as about 2.2 to 2.3. Within these ranges of pH the myrosinase is inhibited. At a pH below about 2.0 the myrosinase enzyme is generally irreversibly inhibited. It is believed that subjecting the myrosinase enzyme to an environment with a pH value below about 2.0 results in an irreversible denaturation of the enzyme. Hence, in a specific embodiment the pH range from about 1.0 to about 2.0 is relevant to provide an irreversibly inactivated myrosinase enzyme. The pH may be obtained using any acid, such as sulphuric acid, hydrochloric acid or phosphoric acid or the acid may be organic, such as citric acid or acetic acid. In certain specific embodiments the acid is also capable of serving as a chelating agent, which acids comprise e.g. citric acid, oxalic acid, lactic acid, malic acid, malonic acid, tartaric acid, succinic acid. Certain myrosinases contain a metal atom, e.g. a zinc atom, which may be involved in the activity of the enzyme, and it is believed that a chelating acid may inhibit the enzyme also by sequestering the metal atom. Furthermore, without being bound by theory the present inventors believe that a chelating acid may bind metal ions present in solution, e.g. ferrous iron, and thereby prevent non-enzymatic metal ion-mediated breakdown of glucosinolates and phenolics. In a particular embodiment the acid is citric acid or acetic acid. Figure 3 shows the effect of a chelating acid, i.e. citric acid, on the activity of a myrosinase.

In connection with some applications it may be desirable to fully or partly remove and/or neutralise the acid. Low pH of products according to the invention may e.g. interfere with later enzymatic applications and it may also interfere with the flavour of food products produced on basis of one or more products according to the present invention, particularly if relatively large amounts of such products are added to the food product.

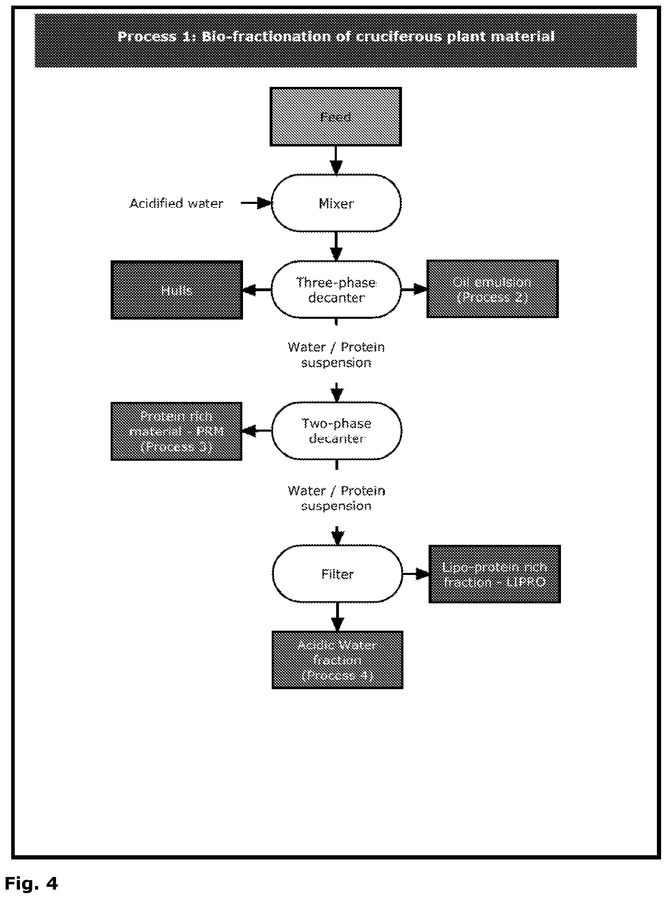

Figure 4 illustrates a general process for the fractionation of cruciferous plant material. The terms "fractionation" and "bio-fractionation" may be used interchangeably and refer to the separation of components of a plant seed into different factions, which may be further processed in order to obtain a final product for that particular fraction. Other crops may be processed using the same and/or similar processes. It is an object of the present exemplified embodiment to provide a fractionation of the cruciferous plant material into separate products, such as proteins, glucosinolates, myrosinase enzymes, phenolics, fibre fractions, etc. In particular, it is an object of the present process to obtain a fraction of the enzyme myrosinase in its native form as well to separate glucosinolates from the native myrosinase enzyme.

In the process of the invention, the seeds are initially disrupted. For the purpose of the present invention any disruption method is appropriate, and the specific type of disruption principle employed may be chosen depending on the nature of the seeds and their specific composition. For example, the disruption principle may be selected from such parameters as the water and oil contents of the seeds, the size of the seeds prior to the disruption, and the hardness of the seeds. The disruption principle is typically selected so as to allow the disruption of the cell walls of cells in the seeds, and typical principles comprises cutting, pressing, chopping, milling, grinding, shredding, grating etc. In a preferred embodiment the disruption involves pressing to allow separation of an oil fraction from an oil-depleted fraction.

In a preferred embodiment the disruption involves pressing to allow separation of an oil fraction and an oil-depleted fraction. The material obtained after pressing is referred to as "Feed" in Figure 4. The pressing is carried out at mild conditions that preserve the proteins in their native form. This implies that the consecutive process is performed at low temperature, e.g. a temperature in the range of about 0°C to ambient temperature, such as in the range of about 0°C to about 20°C, about 19°C, about 18°C, about 17°C, about 16°C, about 15°C, about 10°C or about 5°C, or mildly increased temperatures, e.g. a temperature in the range of about ambient temperature to about 50°C, such as to about 45°C, about 40°C, about 35°C or about 30°C. Further, to obtain successful bio-fractionation the seeds should be mature and have low water content. The glucosinolates should be preserved in their native state. However, a high water content, i.e. above 9% by weight during the initial disruptive processing may result in enzymatic degradation of the glucosinolates potentially creating irreversible damage to the final products. Therefore, the water content should be fairly low, e.g. in the range of about 2%, e.g. about 4%, to about 9% by weight, to facilitate extraction of protein and to avoid enzymatic degradation of the glucosinolates followed by chemical modification of the proteins by reactions with the glucosinolate degradation products. If these criterions are met the produced oil has low or undetectable contents of glucosinolate degradation products and the proteins and fibres in the seed residues are kept at their native form. It is preferred that the temperature is below ambient temperature in the disruption to further minimise enzymatic degradation of glucosinolates.

The oil may be separated immediately after pressing, e.g. using filtration or centrifugation, or the oil-depleted fraction, e.g. the disrupted seeds, and the oil fraction may be mixed with aqueous acid in the bio-fractionation process to extract proteins, soluble fibres, glucosinolate and other components of interest. Since the disrupted seeds contain both the glucosinolates and the native myrosinase enzyme caution should be taken to avoid enzymatic glucosinolate degradation during the following extraction step. The extraction (in the "Mixer" of Figure 4) is performed in aqueous acid, and to avoid glucosinolate degradation pH is kept low to minimise the myrosinase activity as long as the glucosinolates are in contact with the myrosinase enzymes. The temperature is preferably retained low, the lower the temperature the lower the enzymatic activity of myrosinase.

The duration of the extraction step may be selected freely, e.g. the extraction may take place instantaneously, or the extraction may have a duration up to e.g. 3 hours, such as 1 minute, 10 minutes, 15 minutes, 30 minutes or 1 hour. The extraction may advantageously be performed as a continuous process. In certain embodiments it may be necessary to physically agitate the mixture during extraction. For example, the extraction may be performed in a vessel equipped with a stirring blade, an impeller, a Rushton turbine, a propeller or the like, or the mixing vessel may otherwise be fitted to agitate the mixture of the disrupted seeds with aqueous acid. In an embodiment the mixing, optionally combined with simultaneous disruption, is performed by wet milling. In particular, when the mixture of the disrupted seeds with aqueous acid is physically agitated this generally involves subjecting the mixture to shear stress. In a preferred embodiment, the components of interest, e.g. proteins, fibres, myrosinase, glucosinolates etc. are found in the liquid phase. The components of interest may be dissolved in the liquid phase or the components of interest may be found in a precipitated state. In certain embodiments of the invention some components of interest are found in a dissolved state and other components of interest are in a precipitated form.

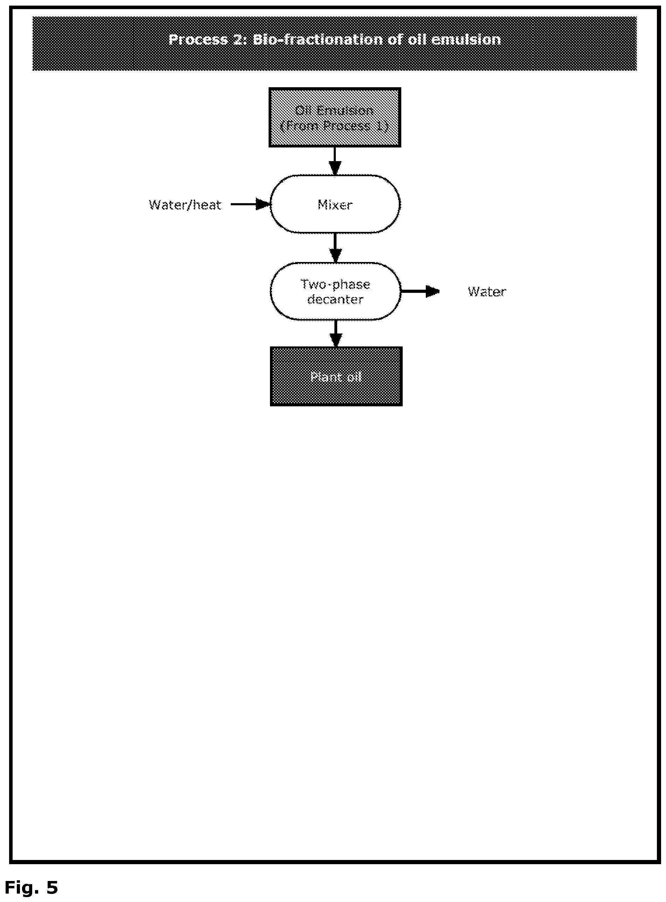

Following extraction of the disrupted seeds, e.g. the press cake, the mixture of the disrupted seeds with aqueous acid may be subjected to a solid-liquid separation to separate a liquid phase with the components of interest from a solid phase (or "hulls"). This can be accomplished by use of e.g. centrifuges, sieves or hydrocyclones or combinations of these. In a particular preferred embodiment, a three-phase decanter is used to obtain three fractions comprising an oil phase, e.g. an oil emulsion, a first acidic aqueous phase, e.g. a protein suspension, and a solid phase of the hulls. The oil emulsion may be further treated to obtain a purified oil fraction; Figure 5 illustrates the further processing of the oil emulsion obtained from the three-phase decanter. In this embodiment the oil emulsion is mixed with water under increased temperature, and the obtained suspension is treated in e.g. a two-phase decanter centrifuge to provide a purified oil and a water phase.

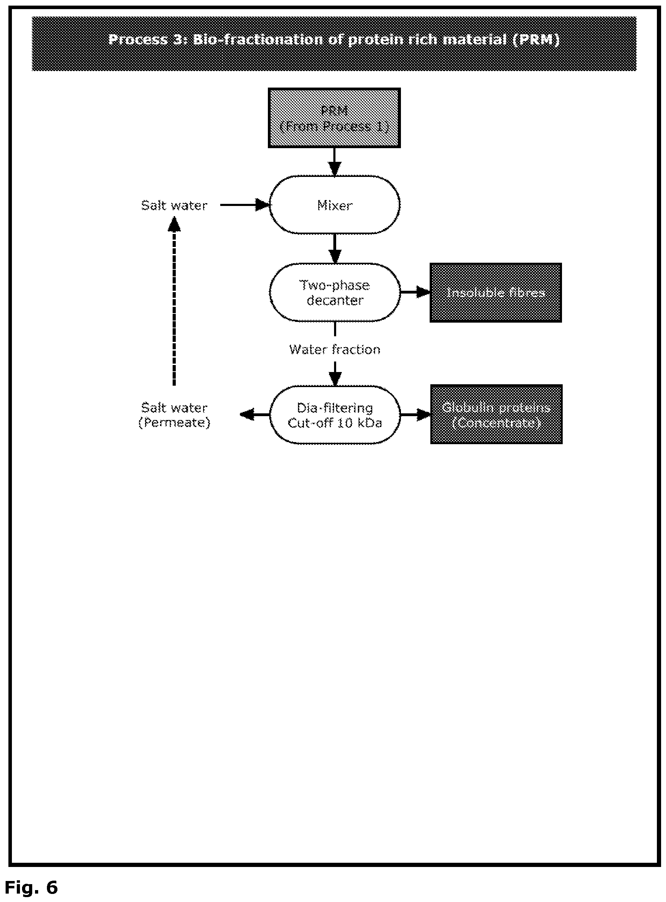

The first acidic aqueous phase, e.g. the protein suspension, obtained from the three-phase decanter centrifuge, may be processed using a two-phase decanter centrifuge in order to fractionate the protein suspension to provide a second acidic aqueous phase, or second protein suspension, and a protein rich fraction ("Protein Rich Material" or PRM). Myrosinase and glucosinolate from the first acidic aqueous phase are found in the second aqueous phase, and the protein rich fraction comprises protein free from both myrosinase and glucosinolate, and this fraction may also be referred to as a protein isolate. This protein isolate may be subjected to any further processing step as desired; appropriate further processing is known to the skilled person. For example, Figure 6 illustrates the processing of the protein rich fraction, which in this case also comprises insoluble fibres. The protein rich fraction is mixed with water, optionally also with salt (indicated as "salt water") and/or optionally at alkaline pH, in a mixer. Alkaline pH facilitates solubilisation of protein from the insoluble fibres, although water at neutral pH may also solubilise protein. It is preferred that salt, e.g. NaCl, is also present, e.g. at about 0.02 M to about 1.0 M, since salt may prevent discolouration, e.g. in the form of browning, due to oxidation of phenolic compounds (especially sinapin and other sinapoyl derivatives). The salt water with insoluble fibres and solubilised protein is subjected to a solid-liquid separation, e.g. a two-phase decanter centrifuge, to separate the insoluble fibres from the solubilised protein ("Water Fraction"). The water fraction may be subjected to a desalting operation, e.g. diafiltration at 20 kDa, 10 kDa, 5 kDa, 3 kDa or 1 kDa, to remove salt and also optionally concentrate the solubilised protein as a protein concentrate ("Globulin proteins"). Protein and insoluble fibres produced in the steps shown in Figure 6 are free from glucosinolates and glucosinolate degradation products, as well as myrosinase, and the protein and insoluble fibres are products of the invention.

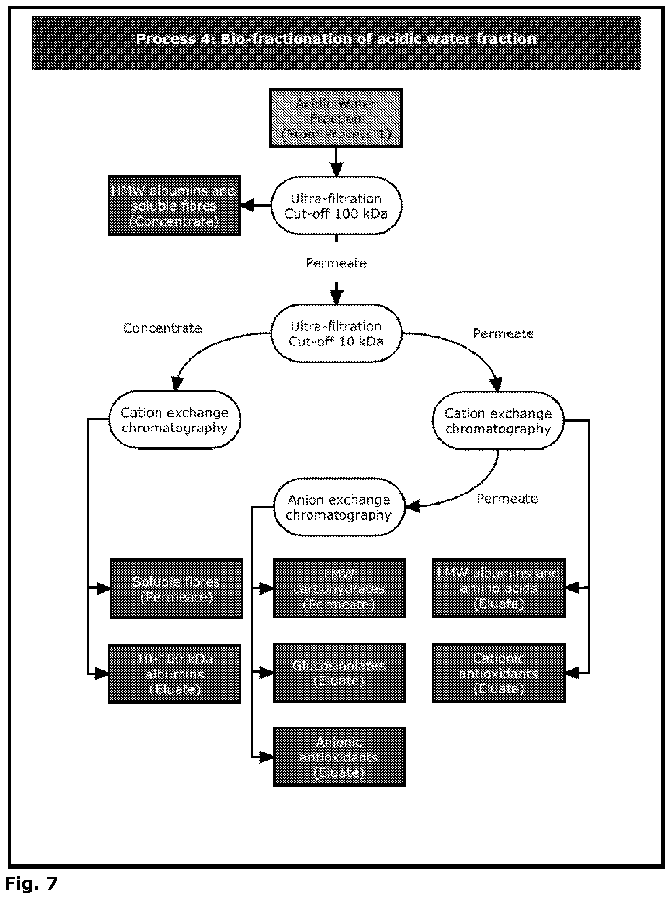

The second acidic aqueous phase, e.g. the second protein suspension, obtained from the two-phase decanter centrifuge comprises water soluble compounds such as proteins, glucosinolates, myrosinase enzymes, soluble dietary fibres and other soluble compounds. The second acidic aqueous phase obtained from the two-phase decanter centrifuge may be subjected to a further solid-liquid separation, e.g. a filtration or centrifugation to obtain a lipoprotein rich fraction in the retentate and a third acidic aqueous phase ("Acidic Water fraction" in Figure 4 and Figure 7). The filtering process applied may be any filtering process suitable for separation of a water/protein suspension.

The third acidic aqueous phase will be processed according to the invention to separate myrosinase from glucosinolate to provide a myrosinase-containing fraction and a myrosinase-free fraction, for example as illustrated in Figure 7. In other embodiments, the first or the second acidic aqueous phases are processed directly to separate myrosinase from glucosinolate without the additional process steps outline above. In yet a further embodiment, the mixture of the disrupted seeds with aqueous acid is processed directly as illustrated in Figure 7. The first, second and third acidic aqueous phases are commonly referred to as the "Acidic Water Fraction".

Figure 7 illustrates the further processing of the glucosinolates and myrosinase enzymes found in the Acidic Water Fraction. In the embodiment of Figure 7, the acidic water fraction is subjected to a step of ultrafiltration to separate glucosinolate and myrosinase based on differences in size. Ultrafiltration is considered particular suitable for industrial purposes in processes which require to purify, separate, and concentrate target macromolecules in continuous systems. In a specific embodiment the process of the invention is performed continuously. The Acidic Water Fraction or more generally, the aqueous mixture, may be subjected to ultrafiltration using a cut-off value in the range of about 10 kDa to about 300 kDa, preferably about 50 kDa to about 200 kDa, more preferably about 75 kDa to about 150 kDa, even more preferably 85 kDa to about 125 kDa. In the embodiment of Figure 7 the myrosinase enzymes are removed from the glucosinolates using ultrafiltration with a cut-off value of about 100 kDa. In general the ultrafiltration membrane and its cut-off value are selected such that glucosinolates and certain low molecular weight (LMW) proteins are found in the permeate whereas certain high molecular weight (HMW) proteins including myrosinase enzymes and typically also soluble fibres are located in the concentrate (or retentate).

Alternatively, the separation of myrosinase and glucosinolates can also be performed by contacting the mixture of the disrupted seeds with aqueous acid or the Acidic Water Fraction with an adsorptive material. In the context of the present invention the term "contact" should be understood as bringing the aqueous acidic mixture into contact with the adsorptive material, e.g. a chromatography resin, thereby allowing the components, dissolved or suspended, of the plant material to interact with the surface of the adsorptive material containing appropriate functional groups. The contacting may be performed in any appropriate contacting vessel, for example a stirred or otherwise mixed tank, or the resin may be placed in a column serving as a contacting vessel when contacting the plant material with the resin. Columns with the resin may be of any type used in chromatography, such as packed or expanded bed columns, axial flow columns, or radial flow columns, and such columns may be operated according to any chromatographic principle. The resin need not be in the same type of contacting vessel in all steps of the process. For example, the contacting may be performed in a stirred tank while for subsequent elution steps the resin is transferred to a column. It is preferred to use a column as the contacting vessel for both the contacting step and elution steps.

Proteins, and other polymeric biomolecules, have numerous functional groups that can have positive and/or negative charges. These functional groups are typically of a weakly charged nature and therefore their charge will be dependent on the ambient pH. Thus, at the low pH of the invention myrosinases will generally be at their cationic form thus allowing for binding to the stationary phase of a cation exchange chromatography resin. In contrast, glucosinolates are negatively charged and will not bind to a cation-exchange material. Therefore the glucosinolate may be separated from the myrosinase by contacting the mixture of the disrupted seeds and aqueous acid with cation-exchange material or an anion-exchange material to adsorb the myrosinase or the glucosinolate, respectively.

Myrosinase adsorbed to a cation-exchange material can subsequently be eluted, and recovered, from the material by changing the pH of the ambient liquid to above the isoelectric point of the myrosinase to introduce an electrostatic repulsion between the protein and the functional groups on the resin. Alternatively, myrosinase and glucosinolates may be eluted from the adsorptive material by contacting the material with a solution of high ionic strength, e.g. NaCl at 0.1 to 1 M or higher concentration.

When several different species of proteins or other compounds, each with different characteristics, such as the isoelectric points, are bound to the same ion exchange resin it may be possible to selectively elute one or more of the bound species and thereby fractionate them from other bound species. Selective elution of different species may be obtained by gradually exposing the resin with bound proteins to increasingly strong elution conditions. For example, selective elution from a cation-exchange material may be obtained by first increasing to one pH value higher than the binding pH, then to yet another higher pH etc. Such step-wise selective elution is also contemplated in the process of the invention. It is also possible to gradually increase the ionic strength of the eluent solution and thereby obtain selective elution.

It is considered to use gradients for elution. With a "gradient" is understood that the liquid phase of the column is subjected to a gradual change from one extreme condition to another extreme condition. The gradient may be created by proportionally mixing the two solutions, so that the liquid applied to the column has an increasing proportion of the latter solution. The gradient may be a simple linear gradient with a constant increase (over time) in the proportion of the eluent solution, or the gradient may follow a more complex pattern. It is also possible to employ step-wise changes in conditions where for example a washing solution is first applied to the column after contacting the plant material with the resin, then a first eluent solution is applied for a given amount of time, then a second eluent solution and so forth.

The chromatography resin may be of any type known in the art for different types of chromatography. For example, the resin may be of a densified type for expanded bed chromatography, a so-called soft gel for liquid chromatography, a resin for high-performance or highpressure liquid chromatography (HPLC). It is, however, preferred to employ a resin of a high capacity designed for operation at high flow-rates, such as for example Sepharose Big Beads, Sepharose Fast Flow, Sepharose XL, Cellthru BigBeads or Rhobust® Adsorbent. The Sepharose brand of chromatography resins is marketed by GE Healthcare (http://www.gehealthcare.com), and appropriate resin types are described in detail in the handbook "Ion Exchange Chromatography & Chromatofocusing, Principles and Methods" published by GE Healthcare. Cellthru BigBeads are marketed by Sterogene Bioseparations (http://www.sterogene.com). Rhobust® Adsorbents are marketed by Upfront (http://www.upfront-dk.com). Other types of adsorbent material employed in ion exchange separation are, however, also considered to be within the definition of a "chromatography resin" in the context of the invention. Such adsorbent material comprises charged membranes and so-called chromatographic monoliths.

Appropriate operating parameters, such as linear and/or volumetric flow-rates, appropriate diameter and height of a chromatography column, amount of chromatography resin needed for a given process, equilibration and regeneration of the resin, buffering capacity of material contacted with the resin etc. are likewise described in the handbook "Ion Exchange Chromatography & Chromatofocusing, Principles and Methods" and other reference manuals well-known to the skilled person.

In a further embodiment, the mixture of the disrupted seeds with aqueous acid is contacted with an affinity adsorptive material functionalised with appropriate ligands, such as a lectin, e.g. concanavalin A, to adsorb myrosinase without adsorbing glucosinolate.

In the embodiment of Figure 7, the permeate comprising glucosinolates but no myrosinase may be subjected to a further ultrafiltration step with a lower cut-off than the preceding step, e.g. with a cut-off of 10 kDa. This will provide a concentrate with proteins of 10 to 100 kDa molecular weight and soluble fibres. Fibres and protein may be separated by contacting the concentrate with an ion-exchange material, e.g. a cation-exchange resin or an anion-exchange resin, to adsorb the protein while keeping the soluble fibres in the flow-through. The concentrate being at low pH may be contacted directly with a cation-exchange material, whereas the pH may be increased prior to contacting with an anion-exchanger.

The permeate from the second, e.g. 10 kDa cut-off, ultrafiltration will generally contain peptides and LMW proteins and carbohydrates of below 10 kDa molecular weight as well as small molecules, such as glucosinolates, antioxidants and phenolic compounds. The components of the second permeate may be separated by contacting initially with a cation-exchange material and then contacting the flow-through from the cation-exchange step with an anion-exchange material. The cation-exchange step will adsorb proteins ("LMW albumins"), amino acids, and cationic antioxidants, which may be recovered by elution as described above. In the following anion-exchange step glucosinolates and anionic antioxidants will bind to the ion-exchanger and may be recovered by elution as described above. The run-through fraction from the anion-exchange step will comprise LMW carbohydrates.

The specific unit operations illustrated in Figure 7 may be combined as desired using any necessary modification of the process streams for the different operations, as long as myrosinase and glucosinolate are separated from each other. Accordingly, the process for the manufacture of the products from the plant seeds comprises a number of different steps for arriving at the final products. The order in which the steps are presented should not be limiting for the present invention. The steps may be executed in any order suitable. According to the present invention it is important that the disrupted seeds are mixed with aqueous acid at low pH. It is also possible to add further technical aids such as enzymes, flocculants, filter aids, etc., to e.g. solubilise, clarify or hydrolyse components, e.g. carbohydrates, cell wall components, proteins etc., without deviating from the invention. For example, the mixture may be supplemented with a cell wall degrading enzyme to improve accessibility to cell components, or the mixture may be supplemented with a flocculant to precipitate desired components.

In other aspects the invention relates to products obtainable in the process of the invention.

The process may further comprise the fractionation of fibres. The term "fibre" as used in connection with the present invention denotes polymeric compounds that are resistant to enzymatic digestion in the digestive tract, i.e. in the stomach and small intestine and, thus, reach the large intestine essentially intact. As such, "resistant starch" may be embraced by the term "fibres" according to the present invention. Upon ingestion, fibres have several beneficial physiological effects such as protection against colon cancer, improving glucose tolerance and insulin sensitivity, lowering plasma cholesterol and triglyceride concentrations, increasing satiety, and possibly even reducing fat storage.

Dietary fibres are the indigestible portion of plants that move food through the digestive system, absorbing water and making defecation easier. Dietary fibre consists of non-starch polysaccharides such as cellulose and many other plant components such as dextrins, inulin, lignin, waxes, chitins, pectins, beta-glucans and oligosaccharides. Dietary fibres are usually divided according to whether they are water-soluble or not. Insoluble fibre possesses passive water-attracting properties that help to increase bulk, soften stool and shorten transit time through the intestinal tract. Soluble fibre usually undergoes metabolic processing in the gut via fermentation, yielding end-products with broad, significant health effects.

Soluble fibres may be desirable to remove from a protein product, e.g. a protein isolate or concentrate, to be used to prepare an animal feed. However, soluble fibres may themselves constitute a potentially commercially interesting component from plant materials. Soluble fibres can be used as e.g. a sugar replacement agent. Soluble fibres of current commercial interest comprise e.g. fructans, inulin, oligofructose, polydextrose, indigestible dextrins, etc. Due to the solubility in water, these products find widespread use in the food industry, in particular as a low calorie sugar substitute in combination with e.g. high intensity sweeteners. Soluble fibres can also be used to improve the nutritional qualities of various food products.

### Examples

### Example 1 - Recovery of myrosinase activity after low pH-treatment

0.5 gram full fat seeds of *Brassica napus* L. (DM 8%) was milled in a coffee grinder and subsequently mixed with 10.00 mL citrate buffer varying from 1 - 200 mM. Additionally samples containing either 100 mM citrate buffer and 10 mM sulphuric acid or 25 mM citrate buffer and 50 mM sulphuric acid were made. Mixing of the ground seed material with the different buffers was performed with wet milling using an Ultra Turrax for 2 minutes. Temperature was kept at 20 °C.

Centrifugation at 4000 x g for 5 minutes was performed to yield a supernatant and a sediment phase. pH was measured in all solutions. Likewise measurements of the UV absorbance at both 280 nm and 325 nm were performed.

The myrosinase activity after the treatment at low pH was measured using a spectrophotometric method where sinigrin (500 µL of 1.2 mM) was applied as the substrate, ascorbic acid was applied as an activator of the reaction (75 µL of 10 mM) and phosphate buffer (variable volume of 50 mM, pH 6.5) to keep the pH constant and finally supernatant (variable volume, typically from 10 - 100 µL) containing myrosinase where the total volume was kept at 1.5 mL in a 0.5 cm quartz cuvette. Measurement was performed using blanks and the activity was calculated from the decrease in absorbance at 227 nm resulting from the enzymatic hydrolysis of the substrate. Measurements were performed at 20 °C.

Myrosinase activity was measured as the activity that was possible to recover after exposure to different pH values as shown in Figure 1. pH values measured in the supernatant was affected by the buffering power of the seed components mainly covered by proteins. Recovered activity of myrosinase measured at pH 6.5 after exposure to pH values at 5.5-4.5 was almost equal to the activity that can be found for an extraction using pH 6.5. Hence the myrosinase is not degraded by the exposure to these pH values, and full recovery of the activity was possible. At lower pH values from pH 4 to 3 a linear decrease in recovered active myrosinase can be observed and only 30 % of original myrosinase activity can be recovered. Lowering the pH values to 2.1 results in a further lowering of recoverable reactivated myrosinase amounting to below 10 % of the original activity indicating an irreversible inactivation of the myrosinase.

Protein solubility was increased as measured by direct UV spectroscopy at 280 nm when pH was lowered from pH 5.5 to 3.0 yielding an increase amounting to 25 %. Hence the reduction of recoverable myrosinase activity is not a result of lowered solubility of the myrosinase in the supernatant phase.

### Example 2 - Glucosinolate level in solution effected by pH in solution

0.5 gram full fat seeds of *Brassica napus* L. (DM 8%) was milled in a coffee grinder and subsequently mixed with 10.00 mL citrate buffer varying from 1 - 200 mM. Additionally samples containing either 100 mM citrate buffer and 10 mM sulphuric acid or 25 mM citrate buffer and 50 mM sulphuric acid were made. To accomplish lower pH values mixtures of increasing concentrations of sulphuric acid were also prepared. These ranged from 40 mM to 150 mM sulphuric acid. Mixing of the ground seed material with the different buffers was performed with wet milling using an Ultra Turrax for 2 minutes. Temperature was kept at 20 °C.

Centrifugation at 4000 x g for 5 minutes was performed to yield a supernatant and a sediment phase. pH was measured in all solutions.

Supernatant (1 mL) was added to an anion-exchange column (1mL Sephadex DEAE, A-25, GE-Healthcare) to adsorb glucosinolates to the ion-exchange resin and thereby separate them from myrosinase. Unbound and loosely bound material comprising myrosinase were washed of the column using 2 x 1 mL deionised water and 2 x 0.5 mL 0.02 M acetate buffer pH 5.0. 75 µL Sulfatase (17 mg/mL) is added to the column and this is left overnight and subsequently desulfoglucosinolates provided by the sulfatase activity are eluted with 3 x 1 mL deionised water. Desulfoglucosinolates are analysed by use of micellar electrokinetic capillary chromatography.

Glucosinolates analysed as desulfoglucosinolates are used as another measure of how active the myrosinase enzymes in the solution at different pH values have been. This is important as the goal is to avoid the degradation of glucosinolates.

Remaining intact glucosinolates in solution after exposure to myrosinase is shown in Figure 2. This level is depending on the reaction time afforded as all enzymatic reactions. Remaining glucosinolates after exposure to pH values of 5.5 to 4.5 were low. Only 17 % intact glucosinolates were left at these pH values, which was also expected. Lowering pH to between 3 and 4, reduced the remaining intact glucosinolates to around 50 % of the maximal obtainable. Lowering the pH to around 2 afforded a preservation of the intact glucosinolates and proofs the possibility of conserving the intact glucosinolates in solution without prior heat inactivation of myrosinase. Furthermore, the combination of the treatment at low pH with separation of the myrosinase from the glucosinolates in the anion-exchange chromatography provides that a product free from glucosinolates and glucosinolate degradation products can be produced in the method of the invention.

### Example 3 - Myrosinase activity in different pH and different buffer systems

0.5 gram full fat seeds of *Brassica napus* L. (DM 8%) was milled in a coffee grinder and subsequently mixed with 10.00 mL buffer using 50 mM citrate or acetate adjusted to different pH values ranging from pH 7 to pH 2. Mixing of the ground seed material with the different buffers was performed with wet milling using an Ultra Turrax for 2 minutes. Temperature was kept at 20 °C.

Centrifugation at 4000 x g for 5 minutes was performed to yield a supernatant and a sediment phase. pH was measured in all solutions.

The myrosinase activity was measured using a spectrophotometric method where sinigrin (500 µL of 1.2 mM) was applied as the substrate, ascorbic acid was applied as an activator of the reaction (75 µL of 10 mM) and buffer according to the sample conditions (citrate or acetate) (variable volume of 50 mM, pH variable according to sample conditions) to keep the pH constant and finally supernatant (variable volume, typically from 10 - 100 µL) containing myrosinase where the total volume was kept at 1.5 mL in a 0.5 cm quartz cuvette. Measurement was performed using blanks and the activity was calculated from the decrease in absorbance at 227 nm resulting from the enzymatic hydrolysis of the substrate. Measurements were performed at 20 °C.

The pH effect on myrosinase activity depends on the buffer being used. Citrate buffers have a more pronounced effect on the inactivation of myrosinase as seen in Figure 3. Importantly, at pH 4.0 using a citrate buffer it is seen that the measured myrosinase activity is very low and almost not existing.

The difference between effects exerted by acetate and citrate may be originating from the chelating ability of the citrate to form a complex with the Zn ion in the myrosinase.

### Example 4 - Affinity chromatography to capture myrosinase and glycoproteins

Glycoproteins and hence myrosinases can be isolated by binding to an appropriate affinity chromatography matrix or resin, e.g. Sepharose with Concanavalin A attached. Concanavalin A binds a-D-glucopyranosyl- and a-D-mannopyranosyl- groups with free hydroxyl groups at the C-3, C-4 and C-5 positions. This give the specific binding to the mannoside part of the myrosinase glycoproteins.

In a laboratory experiment, a column can be prepared in a Pasteur pipette fitted with a glass wool as filter in the bottom. 2 mL of swollen Con-A Sepharose material is added to the column and allowed to settle. The column is equilibrated with 0.02 M Tris-HCl + 0.5 M NaCl, pH 7.4. An extract of myrosinase is prepared from 10 g milled *Brassica napus* L. suspended and wet milled using ultra turrax for 2 minutes in a 20 °C solution of 70 mL deionised water. Centrifugation of the extract for 5 minutes at 4000 x g yielding a supernatant which is applied to the column. Unbound compounds are eluted by use of the equilibrium buffer. Approximately 10 mL of 0.25 M methyl- a-D-mannopyranoside dissolved in the equilibrium buffer is used to elute the bound myrosinase from the column.

This procedure facilitates a fast separation of myrosinase from the glucosinolate substrates and subsequently recovering the myrosinases as a product free of glucosinolates. Affinity separation of myrosinase using a concanalin A-derivatised resin can thus readily be used to separate myrosinase from glucosinolates after treatment at low pH.

## Claims

1. A process for the manufacture of a product from seeds from a plant of the order Capparales comprising the steps of:
- providing the seeds having a water content of about 9% by weight or less;
- disrupting the seeds;
- mixing the disrupted seeds with aqueous acid to provide a pH of the mixture in the range of about 1.0 to about 3.0;
- separating myrosinase from glucosinolates to provide a myrosinase-containing fraction and a myrosinase-free fraction; and
- isolating the product from the myrosinase-containing fraction or from the myrosinase-free fraction;
wherein the temperature of the disrupted seeds and the aqueous mixture is maintained at a value of from about 0°C to about 65°C.

2. A process for the manufacture of a product from seeds from a plant of the order Capparales comprising the steps of:
- providing the seeds having a water content of about 9% by weight or less;
- disrupting the seeds;
- mixing the disrupted seeds with aqueous acid comprising a chelating acid to provide a pH of the mixture in the range of about 1.0 to about 5.0;
- separating myrosinase from glucosinolates to provide a myrosinase-containing fraction and a myrosinase-free fraction; and
- isolating the product from the myrosinase-containing fraction or from the myrosinase-free fraction;
wherein the temperature of the disrupted seeds and the aqueous mixture is maintained at a value of from about 0°C to about 65°C.

3. A process according to claim 1 or 2, wherein the seeds are from a plant of the family *Brassicaceae,* such as those selected from rapeseeds or canola seeds or seeds of cabbage, broccoli, cauliflower, turnip, mustard, radish, horseradish, cress, wasabi and watercress.

4. A process according to any one of claims 1 to 3 further comprising the step of separating an oil fraction from an oil-depleted fraction.

5. A process according to any one of the preceding claims further comprising reducing the water content to about 9% by weight or less.

6. A process according to claim 5, wherein the water content is reduced by supercritical extraction, by supercritical extraction using carbon dioxide (CO₂), by solvent extraction or by heating.

7. A process according to any one of the preceding claims, wherein myrosinase and glucosinolates are separated based on their sizes, preferably by subjecting the aqueous mixture to ultrafiltration with a cut-off value of about 100 kDa or less.

8. A process according to any one of the preceding claims, wherein the myrosinase is separated from glucosinolate by contacting the aqueous mixture with an ion exchange resin and/or wherein myrosinase is adsorbed to an affinity resin.

9. A process according to claim 8, wherein myrosinase is adsorbed to a cation-exchange resin and/or to a concanavalin A-functionalised resin, and/or wherein glucosinolate is adsorbed to an anion-exchange resin.

10. A process according to any one of the preceding claims, wherein the pH of the aqueous mixture is about 2.0 to about 2.5, preferably about 2.2 to about 2.3.

11. A process according to any one of claims 2 to 10, wherein the chelating acid is selected from citric acid, oxalic acid, lactic acid, malic acid, malonic acid, tartaric acid, or succinic acid or a combination thereof.

12. A process according to any one of the preceding claims, wherein the temperature is in the range of about 0°C to about 25°C.

13. A process according to any one of the preceding claims, wherein the steps of mixing with aqueous acid and disrupting the seeds are performed simultaneously.

14. A process according to any of claims 1 to 13, wherein the product is native protein, a glucosinolate, a soluble or non-soluble dietary fibre, active myrosinase, an antioxidant, a soluble phenolic, a lipid soluble antioxidant or vitamin, or an amphiphilic lipid, preferably a phospholipid or a glycolipid.

## Patentansprüche

1. Verfahren zur Herstellung eines Produkts aus Samen einer Pflanze der Ordnung Capparales, umfassend die folgenden Schritte:
- Bereitstellen der Samen mit einem Wassergehalt von ungefähr 9 Gew.-% oder weniger;
- Aufbrechen der Samen;
- Mischen der aufgebrochenen Samen mit wässriger Säure, um einen pH-Wert der Mischung im Bereich von ungefähr 1,0 bis ungefähr 3,0 bereitzustellen;
- Abtrennen der Myrosinase von den Glucosinolaten, um eine myrosinasehaltige Fraktion und eine myrosinasefreie Fraktion bereitzustellen; und
- Isolieren des Produkts aus der myrosinasehaltigen Fraktion oder aus der myrosinasefreien Fraktion;
wobei die Temperatur der aufgebrochenen Samen und der wässrigen Mischung bei einem Wert von ungefähr 0°C bis ungefähr 65°C gehalten wird.

2. Verfahren zur Herstellung eines Produkts aus Samen einer Pflanze der Ordnung Capparales, umfassend die folgenden Schritte:
- Bereitstellen der Samen mit einem Wassergehalt von ungefähr 9 Gew.-% oder weniger;
- Aufbrechen der Samen;
- Mischen der aufgebrochenen Samen mit wässriger Säure, umfassend eine komplexbildende Säure, um einen pH-Wert der Mischung im Bereich von ungefähr 1,0 bis ungefähr 5,0 bereitzustellen;
- Abtrennen der Myrosinase von den Glucosinolaten, um eine myrosinasehaltige Fraktion und eine myrosinasefreie Fraktion bereitzustellen; und
- Isolieren des Produkts aus der myrosinasehaltigen Fraktion oder aus der myrosinasefreien Fraktion;
wobei die Temperatur der aufgebrochenen Samen und der wässrigen Mischung bei einem Wert von ungefähr 0°C bis ungefähr 65°C gehalten wird.

3. Verfahren nach Anspruch 1 oder 2, wobei die Samen von einer Pflanze der Familie *Brassicaceae* stammen, wie solche, die aus Rapssamen oder Canolasamen oder Samen von Kohl, Brokkoli, Blumenkohl, Stoppelrübe, Senf, Radieschen, Meerrettich, Kresse, Wasabi und Brunnenkresse ausgewählt sind.

4. Verfahren nach einem der Ansprüche 1 bis 3, das weiterhin den Schritt des Abtrennens einer Ölfraktion von einer ölabgereicherten Fraktion umfasst.

5. Verfahren nach einem der vorhergehenden Ansprüche, das weiterhin das Vermindern des Wassergehalts auf ungefähr 9 Gew.-% oder weniger umfasst.

6. Verfahren nach Anspruch 5, wobei der Wassergehalt durch überkritische Extraktion, durch überkritische Extraktion unter Einsatz von Kohlendioxid (CO₂), durch Lösungsmittelextraktion oder durch Erhitzen vermindert wird.

7. Verfahren nach einem der vorhergehenden Ansprüche, wobei die Myrosinase und die Glucosinolate aufgrund ihrer Größen getrennt werden, vorzugsweise durch Durchführen einer Ultrafiltration mit einem Ausschließwert von ungefähr 100 kDa oder weniger, mit der wässrigen Mischung.

8. Verfahren nach einem der vorhergehenden Ansprüche, wobei die Myrosinase dadurch von dem Glucosinolat abgetrennt wird, dass man die wässrige Mischung mit einem Ionenaustauscherharz in Kontakt bringt und/oder wobei die Myrosinase an ein Affinitätsharz adsorbiert wird.

9. Verfahren nach Anspruch 8, wobei die Myrosinase an ein Kationenaustauscherharz und/oder an ein mit Concanavalin A funktionalisiertes Harz adsorbiert wird, und/oder wobei das Glucosinolat an ein Anionenaustauscherharz adsorbiert wird.

10. Verfahren nach einem der vorhergehenden Ansprüche, wobei der pH-Wert der wässrigen Mischung ungefähr 2,0 bis ungefähr 2,5, vorzugsweise ungefähr 2,2 bis ungefähr 2,3, beträgt.

11. Verfahren nach einem der Ansprüche 2 bis 10, wobei die komplexbildende Säure aus Citronensäure, Oxalsäure, Milchsäure, Äpfelsäure, Malonsäure, Weinsäure oder Bernsteinsäure oder einer Kombination davon ausgewählt ist.

12. Verfahren nach einem der vorhergehenden Ansprüche, wobei die Temperatur im Bereich von ungefähr 0°C bis ungefähr 25°C liegt.

13. Verfahren nach einem der vorhergehenden Ansprüche, wobei die Schritte des Mischens mit wässriger Säure und Aufbrechens der Samen gleichzeitig durchgeführt werden.

14. Verfahren nach einem der Ansprüche 1 bis 13, wobei es sich bei dem Produkt um natives Protein, ein Glucosinolat, einen löslichen oder unlöslichen Nahrungsmittelballaststoff, aktive Myrosinase, ein Antioxidationsmittel, eine lösliche phenolische Verbindung, ein lipidlösliches Antioxidationsmittel oder Vitamin oder ein amphiphiles Lipid, vorzugsweise ein Phospholipid oder ein Glycolipid, handelt.

## Revendications

1. Procédé de fabrication d'un produit à partir de graines issues d'une plante de l'ordre *Capparales,* comprenant les étapes consistant à :
- fournir les graines ayant une teneur en eau d'environ 9% en poids ou moins ;
- désintégrer les graines ;
- mélanger les graines désintégrées avec un acide aqueux afin d'obtenir un pH du mélange dans la plage allant d'environ 1,0 à environ 3,0 ;
- séparer la myrosinase des glucosinolates afin de fournir une fraction contenant de la myrosinase et une fraction sans myrosinase ; et
- isoler le produit de la fraction contenant de la myrosinase ou de la fraction sans myrosinase ;
dans lequel la température des graines désintégrées et du mélange aqueux est maintenue à une valeur allant d'environ 0°C à environ 65°C.

2. Procédé de fabrication d'un produit à partir de graines issues d'une plante de l'ordre *Capparales,* comprenant les étapes consistant à :
- fournir les graines ayant une teneur en eau d'environ 9% en poids ou moins ;
- désintégrer les graines ;
- mélanger les graines désintégrées avec un acide aqueux comprenant un acide chélatant afin d'obtenir un pH du mélange dans la plage allant d'environ 1,0 à environ 5,0 ;
- séparer la myrosinase des glucosinolates afin de fournir une fraction contenant de la myrosinase et une fraction sans myrosinase ; et
- isoler le produit de la fraction contenant de la myrosinase ou de la fraction sans myrosinase ;
dans lequel la température des graines désintégrées et du mélange aqueux est maintenue à une valeur allant d'environ 0°C à environ 65°C.

3. Procédé selon la revendication 1 ou 2, dans lequel les graines sont issues d'une plante de la famille des *Brassicaceae,* telles que celles choisies parmi les graines de colza ou les graines de canola, ou les graines de chou, de brocoli, de chou-fleur, de navet, de moutarde, de radis, de raifort, de cresson, de wasabi et de cresson de fontaine.

4. Procédé selon l'une quelconque des revendications 1 à 3, comprenant en outre l'étape consistant à séparer une fraction huileuse d'une fraction pauvre en huile.

5. Procédé selon l'une quelconque des revendications précédentes, comprenant en outre la réduction de la teneur en eau jusqu'à environ 9% en poids ou moins.

6. Procédé selon la revendication 5, dans lequel la teneur en eau est réduite par extraction supercritique, par extraction supercritique en utilisant du dioxyde de carbone (CO₂), par extraction par solvant ou par chauffage.

7. Procédé selon l'une quelconque des revendications précédentes, dans lequel la myrosinase et les glucosinolates sont séparés sur la base de leurs tailles, de préférence en soumettant le mélange aqueux à une ultrafiltration avec une valeur de seuil de coupure d'environ 100 kDa ou moins.

8. Procédé selon l'une quelconque des revendications précédentes, dans lequel la myrosinase est séparée du glucosinolate par la mise en contact du mélange aqueux avec une résine d'échange d'ions et/ou où la myrosinase est adsorbée sur une résine d'affinité.

9. Procédé selon la revendication 8, dans lequel la myrosinase est adsorbée sur une résine d'échange de cations et/ou sur une résine fonctionnalisée par la concanavaline A, et/ou le glucosinolate est adsorbé sur une résine d'échange d'anions.

10. Procédé selon l'une quelconque des revendications précédentes, dans lequel le pH du mélange aqueux va d'environ 2,0 à environ 2,5, préférablement d'environ 2,2 à environ 2,3.

11. Procédé selon l'une quelconque des revendications 2 à 10, dans lequel l'acide chélatant est choisi parmi l'acide citrique, l'acide oxalique, l'acide lactique, l'acide malique, l'acide malonique, l'acide tartrique ou l'acide succinique, ou une combinaison de ceux-ci.

12. Procédé selon l'une quelconque des revendications précédentes, dans lequel la température se trouve dans la plage allant d'environ 0°C à environ 25°C.

13. Procédé selon l'une quelconque des revendications précédentes, dans lequel les étapes de mélange avec un acide aqueux et de désintégration des graines sont effectuées de manière simultanée.

14. Procédé selon l'une quelconque des revendications 1 à 13, dans lequel le produit est une protéine native, un glucosinolate, une fibre alimentaire soluble ou non soluble, une myrosinase active, un antioxydant, un composé phénolique soluble, un antioxydant lipidique soluble ou une vitamine, ou un lipide amphiphile, préférablement un phospholipide ou un glycolipide.
